# EUROPEAN PATENT APPLICATION

(11) **EP 4 586 067 A2**
(43) Date of publication of application: **16.07.2025**
(21) Application number: 25166476.9
(22) Date of filing: 19.06.2013
(51) Int. Cl.: G06F 3/04883

(54) **TERMINAL AND METHOD OF OPERATING THE TERMINAL**

(30) Priority: 19.06.2012 KR 20120065402
(62) Divisional of application: 23185936.4
(71) Applicant: Samsung Electronics Co., Ltd., Suwon-si, Gyeonggi-do 16677 (KR)
(72) Inventor: HA, Young-Hee, Suwon-si 16677 (KR)
(74) Representative: HGF

(57) **Abstract**

A terminal comprising a display and a controller. The controller is configured to: control the display to display an icon corresponding to an application; detect a first input on the displayed icon; detect a second input on the displayed icon; execute the application corresponding to the displayed icon if the first input is detected; and display a pop-up window including a menu having at least one configurable setting associated with the application if the second input is detected. The first input and the second input are different gestures. A pressure value of the first input is different from a pressure value of the second input.

## Description

### BACKGROUND OF THE INVENTION

### 1. Field of the Invention:

The present invention relates to a terminal and a method for operating the terminal. Certain embodiments of the invention allow a user to set menu environments in the terminal. More particularly, certain embodiments of the present invention relate to a terminal and a menu environment setting method for allowing a user to conveniently switch to environment setting modes of menus in the terminal.

### 2. Description of the Related Art:

A variety of menus for selecting and running their related functions may be displayed on a screen of a terminal. If one of the menus displayed on the screen is selected or touched by a user, its associated function may be carried out. The term "menu" should be interpreted as including any user interface element, interaction with which can cause at least one function to be selected or deselected, or more generally allows user input to be received.

However, in order to change menu environments, the user needs to switch to environment setting modes of the menus through a number of steps. For example, a quick panel according to Android^{®} Operating System (OS)-based smart phones may display menus such as Wireless Fidelity (Wi-Fi), Bluetooth, Global Positioning System (GPS), Call Notification, and Auto-Rotation. If a touch occurs on an arbitrary menu among the menus displayed on the quick panel, a function related to the touched menu is activated or enabled, and if a touch occurs again on the arbitrary menu, the activated function is deactivated or disabled in a toggle manner.

As described above, the user may activate or deactivate functions through the menus displayed on a quick panel by touching the menus. However, the user needs to go through several steps in order to switch to environment setting modes of the menus. For example, the user must select a main menu on a home screen, select an environment setting menu in the main menu, and then select an environment setting mode for one of displayed menus. As another example, the user may need to enter an option button on the home screen, select an environment setting menu in a displayed option menu, and then select an environment setting mode from a group of at least one displayed menu.

The above information is presented as background information only to assist with an understanding of the present disclosure. No determination has been made, and no assertion is made, as to whether any of the above might be applicable as prior art with regard to the present invention.

### SUMMARY OF THE INVENTION

Accordingly, an aim of certain embodiments of the present invention is to provide a terminal and a menu environment setting method for quickly and intuitively switching to an environment setting mode of a menu in a terminal.

Another aim of certain embodiments of the present invention is to provide a menu environment setting apparatus and method for handily viewing currently set environment information on a menu, in a terminal.

Another aim of certain exemplary embodiment of the present invention is to provide a terminal and a menu environment setting method which allow a user to conveniently view environment information currently set on a menu, in the terminal.

According to a first aspect of the present invention there is provided a terminal comprising: a display; and a controller configured to: control the display to display an icon corresponding to an application; detect a first input on the displayed icon; detect a second input on the displayed icon; execute the application corresponding to the displayed icon if the first input is detected; and display a pop-up window including a menu having at least one configurable setting associated with the application if the second input is detected; wherein the first input and the second input are different gestures; and wherein a pressure value of the first input is different from a pressure value of the second input.

There is further disclosed a terminal comprising: a display screen arranged to display at least one user interface element; and a controller arranged to control the display of the at least one user interface element by the display screen; wherein the controller is further arranged to detect a first gesture, and to determine whether the first gesture occurs on or in connection with a first user interface element; and wherein if the controller determines that a first gesture occurs on or in connection with the first user interface element, the controller is further arranged to switch to a setting mode associated with the first user interface element in which at least one setting associated with the first user interface element may be set.

The controller may be further arranged to detect a second gesture or a third gesture, and to determine whether the second gesture or the third gesture occurs on or in connection with the first user interface element; wherein if the controller determines that a second gesture occurs on or in connection with the first user interface element, the controller may be further arranged to perform a function associated with the first user interface element; and wherein if the controller determines that a third gesture occurs on or in connection with the first user interface element, the controller may be further arranged to control the display by the display screen of information which is set through the first user interface element.

The controller may be further arranged to control the display by the display screen of information which is set through the first user interface element within a pop-up window.

If the controller determines that a second gesture occurs on or in connection with the first user interface element while the display screen is displaying the information which is set through the first user interface element, the controller may be further arranged to perform the function associated with the first user interface element; and wherein if the controller determines that a first gesture occurs on or in connection with the first user interface element or that a second gesture occurs on or in connection with the display of information set through the first user interface element, the controller may be further arranged to switch to the setting mode associated with the first user interface element.

The first gesture, the second gesture and the third gesture may each comprise a separate one of a short touch, a long touch and a double touch.

The at least one user interface element may comprise a Wi-Fi menu among a plurality of menus displayed in a quick panel; wherein the function associated with the first user interface element may comprise toggling the activation or inactivation status of a Wi-Fi function of the terminal; wherein the setting mode may comprise an environment setting mode of the Wi-Fi menu; and wherein displaying information which is set through the first user interface element may comprise displaying environment information set through the Wi-Fi menu within a pop-up window in the vicinity of the Wi-Fi menu, the environment information comprising at least one of a type and a signal strength of a Wi-Fi router.

The at least one user interface element may comprise a call notification menu among a plurality of menus displayed in a quick panel; wherein the function associated with the first user interface element may comprise setting a type of a call notification menu; wherein the setting mode may comprise an environment setting mode of the call notification menu; and wherein displaying information which is set through the first user interface element may comprise displaying environment information set through the call notification menu within a pop-up window in the vicinity of the call notification menu, the environment information comprising at least one of a type of the call notification menu and details of the call notification menu.

There is further disclosed a method of operating a terminal, the method comprising: displaying at least one user interface element; detecting a first gesture; and determining if the first gesture occurs on or in connection with a first user interface element; wherein if it is determined that a first gesture occurs on or in connection with the first user interface element, the method further comprises switching to a setting mode associated with the first user interface element, in which at least one setting associated with the first user interface element may be set.

The method may further comprise: detecting a second or a third gesture; and determining if the second or third gesture occurs on or in connection with the first user interface element; wherein if it is determined that a second gesture occurs on or in connection with the first user interface element, the method further comprises performing a function associated with the first user interface element; and wherein if it is determined that a third gesture occurs on or in connection with the first user interface element, the method further comprises displaying information which is set through the first user interface element.

Displaying information which is set through the first user interface element may comprise displaying the information within a pop-up window.

If a second gesture occurs on or in connection with the first user interface element while displaying the information set through the first user interface element, the method may further comprise performing the function associated with the first user interface element; and if a first gesture occurs on or in connection with the first user interface element or if a second gesture occurs on or in connection with the display of information set through the first user interface element, the method further comprises switching to the setting mode associated with the first user interface element.

There is further disclosed a terminal which includes a controller for, if a first gesture occurs on a specific menu, directly switching to an environment setting mode of specific menu, in which an environment for a function of the specific menu may be set.

There is further disclosed a terminal, which includes a controller for setting activation or inactivation for a Wireless Fidelity (Wi-Fi) function if a short touch occurs on a Wi-Fi menu among a plurality of menus in a quick panel including the plurality of menus, and directly switching to an environment setting mode of the Wi-Fi menu if a double touch occurs on the Wi-Fi menu.

There is further disclosed a terminal, which includes a controller for setting a type of a call notification menu if a short touch occurs on the call notification menu among a plurality of menus in a quick panel including the plurality of menus, and directly switching to an environment setting mode of the call notification menu if a double touch occurs on the call notification menu.

There is further disclosed a method for setting a menu environment in a terminal. The method includes, if a gesture occurs on a specific menu, determining a type of the gesture which has occurred on the specific menu; and if a first gesture occurs on the specific menu, directly switching to an environment setting mode of the specific menu, in which an environment for a function of the specific menu may be set.

There is further disclosed a method for setting a menu environment in a terminal. The method includes displaying a plurality of menus on a quick panel; if a short touch occurs on a Wireless Fidelity (Wi-Fi) menu among the plurality of menus, setting activation or inactivation for a Wi-Fi function; and if a double touch occurs on the Wi-Fi menu, directly switching to an environment setting mode of the Wi-Fi menu.

There is further disclosed a method for setting a menu environment in a terminal. The method includes displaying a plurality of menus on a quick panel; if a short touch occurs on a call notification menu among the plurality of menus, setting a type of the call notification menu; and if a double touch occurs on the call notification menu, directly switching to an environment setting mode of the call notification menu.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 illustrates a structure of a terminal according to an exemplary embodiment of the present invention;
FIG. 2 is a flowchart illustrating a process of controlling a menu according to a type of a gesture in a terminal according to an exemplary embodiment of the present invention;
FIG. 3 is a flowchart illustrating a process of controlling a Wireless Fidelity (Wi-Fi) menu according to a type of a gesture in a terminal according to an exemplary embodiment of the present invention;
FIG. 4 is a flowchart illustrating a process of controlling a call notification menu according to a type of a gesture in a terminal according to an exemplary embodiment of the present invention; and
FIGs. 5A to 5E illustrate display screens provided for a description of the processes shown in FIGs. 2 to 4.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding, but these are to be regarded as merely exemplary. Accordingly, those of ordinary skill in the art will recognize that various changes and modifications of the embodiments described herein can be made without departing from the scope of the invention as defined by the claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.
It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Exemplary embodiments of the present invention are described in detail with reference to the accompanying drawings. The same or similar components may be designated by the same or similar reference numerals although they are illustrated in different drawings.

A terminal according to an exemplary embodiment of the present invention includes a portable terminal and a fixed terminal. The portable terminal may be a mobile electronic device, such as a videophone, a portable phone, a smart phone, an International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an Electronic-Book (E-Book) reader, a portable computer (e.g., a laptop Personal Computer (PC) or a tablet PC), and a digital camera. The fixed terminal may be a desktop PC.

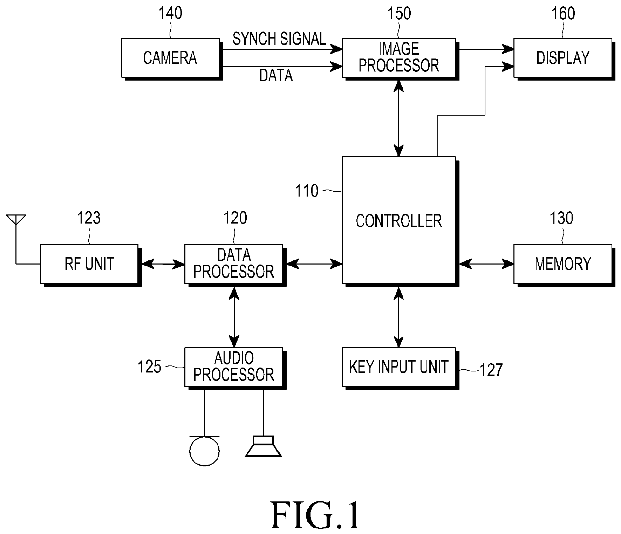

FIG. 1 illustrates a structure of a terminal according to an exemplary embodiment of the present invention.

Referring to FIG. 1, a Radio Frequency (RF) unit 123 is responsible for radio communication of the terminal. The RF unit 123 includes an RF transmitter for frequency up-converting transmission signals and amplifying the up-converted signals, and an RF receiver for low-noise-amplifying received signals and frequency downconverting the amplified signals. A data processor 120 includes a transmitter for encoding and modulating the transmission signals, and a receiver for demodulating and decoding the received signals. In other words, the data processor 120 may include modem and a codec. The codec includes a data codec for processing packet data, and an audio codec for processing audio signals such as voice. An audio processor 125 plays received audio signals output from the audio codec in the data processor 120 using a speaker, and transfers transmission audio signals picked up by a microphone to the audio codec in the data processor 120.

A key input unit 127 includes numeric/character keys for inputting numeric and character information and function keys for setting various functions.

A memory 130 may include a program memory and a data memory. The program memory may store programs for controlling the general operation of the terminal. In accordance with an exemplary embodiment to the present invention, the memory 130 may store a control program for switching to an environment setting mode of a menu according to a type of a gesture. More generally, in certain embodiments the switch may be to a setting mode. The data memory may temporarily store the data generated during execution of the programs.

The controller 110 controls the overall operation of the terminal. In accordance with an exemplary embodiment of the present invention, the controller 110 switches to an environment setting mode of a menu according to a type of a gesture having occurred on or in connection with the menu. The controller 110 runs a related function of the menu or displays currently set environment information on the menu, according to the type of the gesture having occurred on the menu.

While displaying the currently set environment information on the menu in a pop-up window, the controller 110 runs the related function of the menu or switches to the environment setting mode of the menu, according to the type of the gesture having occurred on the menu. While displaying the currently set environment information on the menu in a pop-up window, the controller 110 switches to the environment setting mode of the menu according to the type of the gesture having occurred in the pop-up window. The type of the gesture may include a short touch, a long touch, a double touch, a multi-touch, a drag, and a pressure-sensitive touch.

The controller 110 determines the type of the gesture having occurred on the menu, and may run the related function of the menu if the type of the gesture is a short touch, switch to the environment setting mode of the menu if the type of the gesture is a long touch, and display the currently set environment information on the menu if the type of the gesture is a double touch.

While displaying the currently set environment information on the menu in the pop-up window, the controller 110 may run the related function of the menu if a short touch occurs on the menu. While displaying the currently set environment information on the menu in the pop-up window, the controller 110 may switch to the environment setting mode of the menu if a long touch occurs on the menu. While displaying the currently set environment information on the menu in the pop-up window, the controller 110 may switch to the environment setting mode of the menu if a short touch occurs in the pop-up window. The controller 110 may display the menu in a different color or shape according to the type of the gesture having occurred on the menu.

A camera 140 includes a camera sensor for capturing images and converting the captured optical image signal into an electrical signal, and a signal processor for converting the analog image signal captured by the camera sensor into digital data. The camera sensor may be a Charge-Coupled Device (CCD) or Complementary Metal-Oxide-Semiconductor (CMOS) sensor, and the signal processor may be implemented with a Digital Signal Processor (DSP). The camera sensor and the signal processor may be implemented either in an integrated way, or in a separated way.

An image processor 150 performs Image Signal Processing (ISP) for displaying the image signals output from the camera 140 on a display 160. The ISP may include gamma correction, interpolation, spatial variations, image effects, image scaling, Automatic White Balance (AWB), Automatic Exposure (AE), and Automatic Focus (AF). The image processor 150 processes the image signals output from the camera 140 on a frame-by-frame basis, and outputs the frame image data according to the characteristics and size of the display 160. The image processor 150 includes a video codec, which compresses the frame image data displayed on the display 160 by a preset coding scheme, and decompresses the compressed frame image data into the original frame image data. The video codec may include a Joint Photographic Experts Group (JPEG) codec, a Moving Picture Experts Group 4 (MPEG4) codec, and a Wavelet codec. The image processor 150 may have an On-Screen Display (OSD) function, and may output OSD data according to the size of the displayed screen, under control of the controller 110.

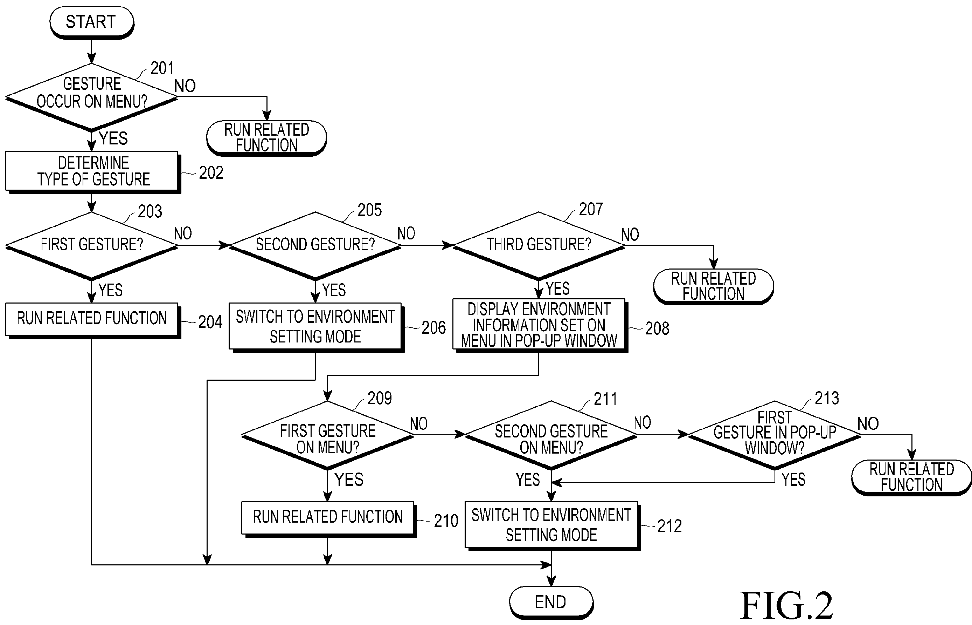

The display 160 displays, on its screen, image signals output from the image processor 150 and data output from the controller 110. The display 160 may include a Liquid Crystal Display (LCD). In this case, the display 160 may include an LCD controller, a memory capable of storing image data, and an LCD panel. When implemented as a touch screen, the LCD may serve as an input unit. In this case, the same keys as those on the key input unit 127 may be displayed on the display 160. The display 160 may display a menu in a different color or shape according to a type of gesture having occurred on the menu. An operation of controlling a menu in the above-described terminal is described below with reference to FIGs. 2 to 5E.

FIG. 2 is a flowchart illustrating a process of controlling a menu according to a type of a gesture in a terminal according to an exemplary embodiment of the present invention. The process illustrated in FIG. 2 will be described with reference to FIG. 1.

Referring to FIG. 2, the controller 110 determines in step 201 whether a gesture occurs on or in connection with a specific menu among one or more menus displayed on the terminal, and determines a type of the gesture having occurred on or in connection with the specific menu in step 202, if a gesture occurs. As noted above, the term menu should be interpreted broadly to encompass any user interface element displayed on the terminal capable of being selected or indicated by a user gesture. In the context of a touch screen, a user gesture may be on or in connection with the menu if the user performs a touch gesture which touches part of the menu. A gesture may be "in connection with a displayed menu" simply by virtue of being performed while the menu is displayed, and may therefore include gestures such as shaking the terminal.

The controller 110 determines in step 203 whether the gesture having occurred on the specific menu is a first gesture, and if so runs a related function of the specific menu in step 204.

The controller 110 determines in step 205 whether the gesture having occurred on the specific menu is a second gesture, and if so directly switches to an environment menu setting mode of the specific menu in step 206.

The controller 110 determines in step 207 whether the gesture having occurred on the specific menu is a third gesture, and if so displays currently set environment information on the specific menu in step 208. In step 208, the controller 110 may display the currently set environment information on the specific menu in a pop-up window near the specific menu.

While displaying the currently set environment information on the specific menu in the pop-up window, the controller 110 may determine in step 209 whether the first gesture occurs on the specific menu, and if so the controller 110 may run the related function of the specific menu in step 210.

While displaying the currently set environment information on the specific menu in the pop-up window, the controller 110 may determine in step 211 whether the second gesture occurs on the specific menu, and if so may directly switch to the environment menu setting mode of the specific menu in step 212. More generally, certain embodiments of the present invention comprise switching to a setting mode (for instance an environment setting mode) in response to detecting a gesture on or in connection with a user interface element (such as a menu).

While displaying the currently set environment information on the specific menu in the pop-up window, the controller 110 determines in step 213 whether the first gesture occurs in the pop-up window, and if so directly switches to the environment menu setting mode of the specific menu in step 212.

Although it is assumed in the above exemplary processes that the first gesture is to execute the function of a menu, the second gesture is to switch to an environment setting mode of the menu, and the third gesture is to display the environment information set for the menu, it is not intended to limit the scope of the invention thereto. Therefore, it can be understood that executing the function of a menu, switching to an environment setting mode of the menu, or displaying the environment information set for the menu may be performed in response to any one of the first to third gestures. The first to third gestures may be any one of a short touch, a long touch, a double touch, a multi-touch, a drag, and a pressure-sensitive touch, and may also include a type of a motion of the terminal (e.g., motion to the left or right, side to side motion, up/down motion, etc.).

Accordingly, as one example the corresponding function is in response to the second or third gesture, the switch to an environment setting mode of the menu is in response to the first or third gesture, and the display of the environment information set for the menu is in response to the first or second gesture.

For example, after the user selects a specific menu, the controller 110 may run a related function of the specific menu, switch to an environment setting mode of the specific menu, or display currently set environment information on the specific menu, according to the motion direction of a terminal. The types of gestures for controlling the specific menu may be set by the user.

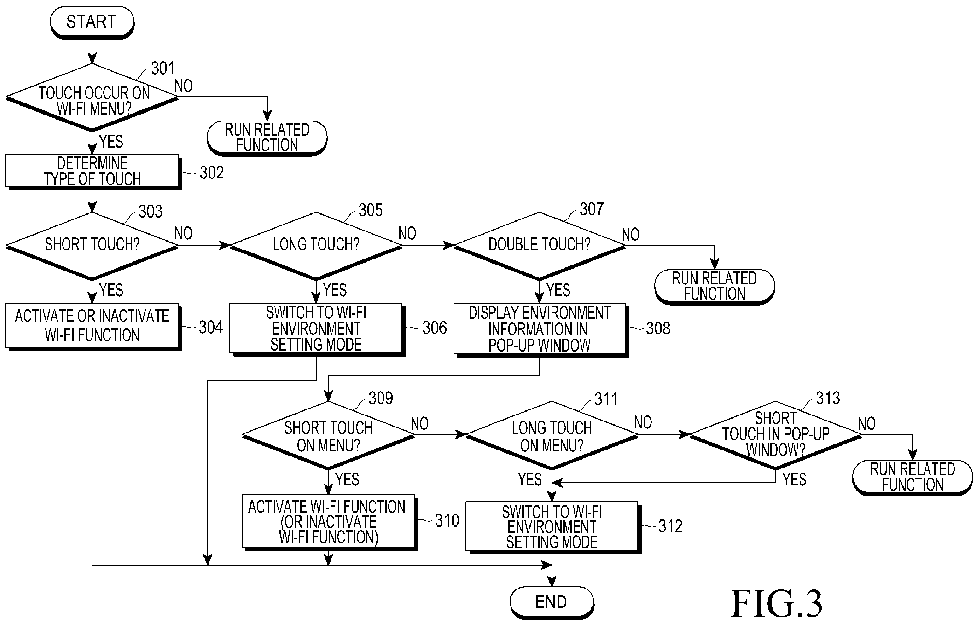

An operation of controlling a menu according to a type of gesture in a terminal is described below with reference to FIGs. 3 to 5E.

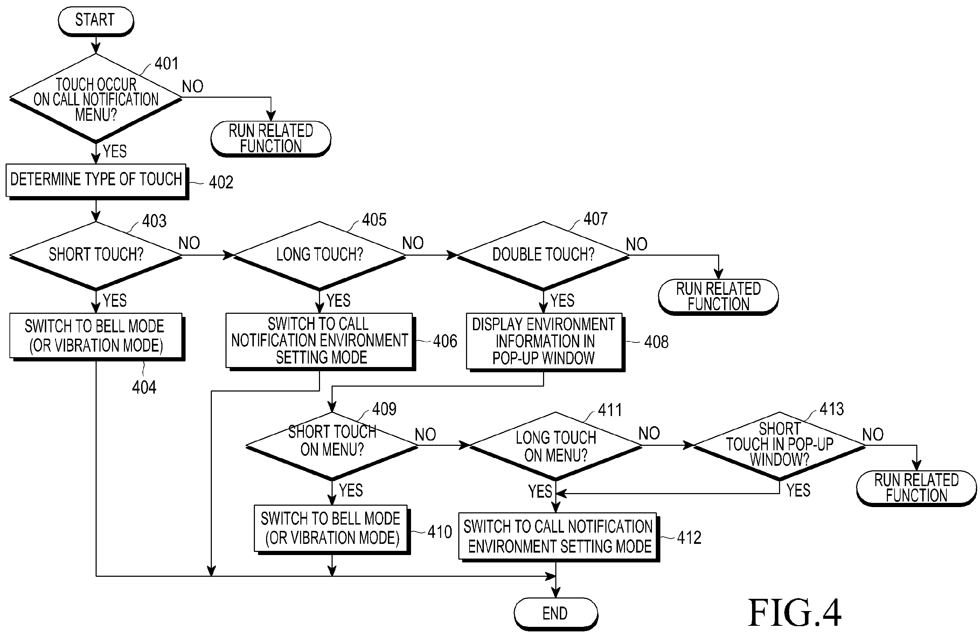

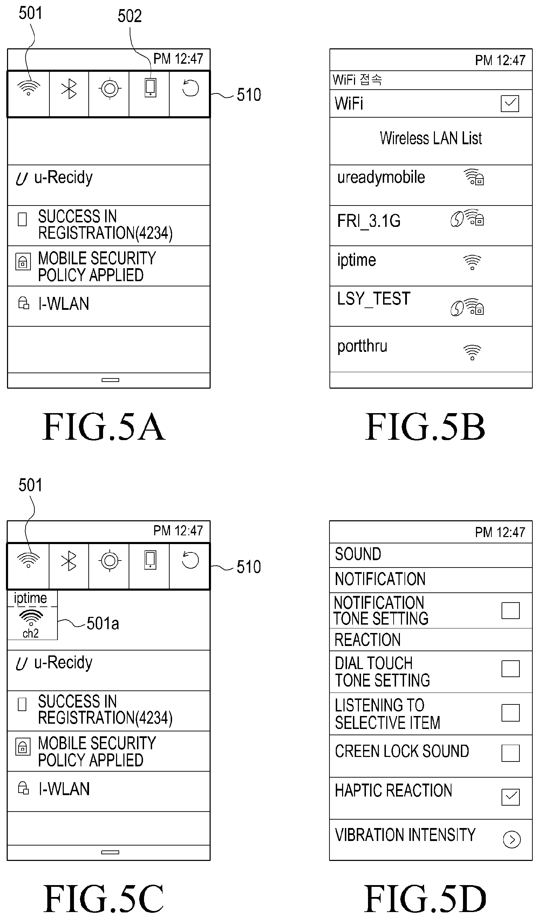

FIG. 3 is a flowchart illustrating a process of controlling a Wi-Fi menu according to a type of a gesture in a terminal according to an exemplary embodiment of the present invention. FIG. 4 is a flowchart illustrating a process of controlling a call notification menu according to a type of a gesture in a terminal according to an exemplary embodiment of the present invention. FIGs. 5A to 5E illustrate display screens provided for a description of the processes shown in FIGs. 2 to 4.

Referring to FIGs. 3, 4, and 5A-5E, the menus may be controlled according to various different types of touches (which may therefore comprise different gestures). A short touch may indicate an action in which a touch occurs within a predetermined time, a long touch may indicate an action in which a touch lasts for a predetermined time or more, and a double touch may indicate an action in which two successive touches occur within a predetermined time.

The processes shown in FIGs. 3 and 4 will be described in detail below with reference to FIGs. 1, and 5A to 5E.

An operation of controlling a Wi-Fi menu 501 displayed on a quick panel 510 is described with reference to FIG. 3. If a top-to-bottom drag occurs starting from an upper part of a screen of the display 160, for instance in a standby mode, the controllers 110 displays the quick panel 510 having preset menus as illustrated in FIG. 5A.

Referring to FIG. 3, the controller 110 determines in step 301 whether a touch occurs on the Wi-Fi menu 501 on the quick panel 510, and determines a type of the touch having occurred on the Wi-Fi menu 501 in step 302 if the touch occurs on the Wi-Fi menu 501.

The controller 110 determines in step 303 whether the type of the touch having occurred on the Wi-Fi menu 501 is a short touch. If the type of the touch having occurred on the Wi-Fi menu 501 is a short touch, then in step 304 the controller 110 activates a Wi-Fi function if the Wi-Fi function is presently inactive and deactivates the Wi-Fi function if the Wi-Fi function is presently active.

The controller 110 determines in step 305 whether the type of the touch having occurred on the Wi-Fi menu 501 is a long touch, and directly switches to a Wi-Fi environment setting mode, as illustrated in FIG. 5B, in which the Wi-Fi environment may be set, in step 306 if the type of the touch having occurred on the Wi-Fi menu 501 is a long touch.

The controller 110 determines in step 307 whether the type of the touch having occurred on the Wi-Fi menu 501 is a double touch, and displays currently set environment information on the Wi-Fi menu 501 in step 308 if the type of the touch having occurred on the Wi-Fi menu 501 is a double touch.

In step 308, the controller 110 may display the currently set environment information on the Wi-Fi menu 501 in a pop-up window near the Wi-Fi menu 501. The controller 110 may display the currently set environment information on the Wi-Fi menu 501 if the Wi-Fi menu 501 is presently active, and announce deactivation of the Wi-Fi function or display environment information previously set on the Wi-Fi menu 501 if the Wi-Fi menu 501 is presently inactive. The controller 110 may display, in the pop-up window, a type of a router currently or previously connected to the terminal and signal strength of the router as the environment information set on the Wi-Fi menu 501.

In FIG. 5C, the controller 110 displays a type "iptime^{™}" of a router currently connected to the terminal and a signal strength of the router as the environment information set on the Wi-Fi menu 501 in a pop-up window 501a near the Wi-Fi menu 501, if the Wi-Fi menu 501 is presently active.

While displaying the currently set environment information on the Wi-Fi menu 501 in the pop-up window 501a, the controller 110 determines in step 309 whether a short touch occurs on the Wi-Fi menu 501, and if so activates or deactivates the Wi-Fi menu 501 in step 310.

While displaying the currently set environment information on the Wi-Fi menu 501 in the pop-up window 501a, the controller 110 determines in step 311 whether a long touch occurs on the Wi-Fi menu 501, and if so directly switches to an environment setting mode of the Wi-Fi menu 501 (as illustrated in FIG. 5B) in step 312.

While displaying the currently set environment information on the Wi-Fi menu 501 in the pop-up window 501a, the controller 110 determines in step 313 whether a double touch occurs in the pop-up window 501a, and if so directly switches to the environment setting mode of the Wi-Fi menu 501 (as illustrated in FIG. 5B) in step 312.

An operation of controlling a call notification menu displayed on the quick panel 510 is described below with reference to FIG. 4. If a top-to-bottom drag occurs starting from an upper part of a screen of the display 160, for instance in a standby mode, the controller 110 displays the quick panel 510 having preset menus as illustrated in FIG. 5A.

Referring to FIG. 4, the controller 110 determines in step 401 whether a touch occurs on a call notification menu 502 on the quick panel 510, and if so determines a type of the touch having occurred on the call notification menu 502 in step 402.

The controller 110 determines in step 403 whether the type of the touch having occurred on the call notification menu 502 is a short touch, and if so changes a type of the call notification menu 502 in step 404. For example, in step 404, the controller 110 switches to a bell mode if the type of the call notification menu 502 is currently set as a vibration mode, and switches to the vibration mode if the type of the call notification menu 502 is currently set as the bell mode.

The controller 110 determines in step 405 whether the type of the touch having occurred on the call notification menu 502 is a long touch, and if so directly switches to a call notification environment setting mode in which a call notification environment may be set (as illustrated in FIG. 5D), in step 406.

The controller 110 determines in step 407 whether the type of the touch having occurred on the call notification menu 502 is a double touch, and if so displays currently set environment information on the call notification menu 502 in step 408.

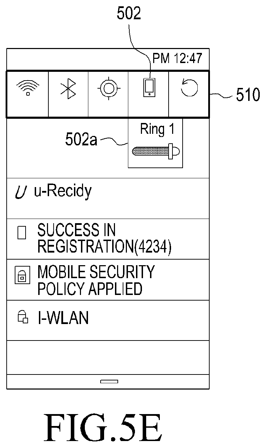

In step 408, the controller 110 may display the currently set environment information on the call notification menu 502 in a pop-up window near the call notification menu 502. For example, the controller 110 may display a detailed vibration setting (e.g., "vibration always") and vibration strength information as the currently set environment information on the call notification menu 502 if the type of the call notification menu 502 is a vibration mode, or bell type and bell volume information as the currently set environment information on the call notification menu 502 if the type of the call notification menu 502 is a bell mode. In FIG. 5E, the controller 110 displays bell type ("Ring1") and bell volume information as the currently set environment information on the call notification menu 502 in a pop-up window 502a near the call notification menu 502 if the type of the call notification menu 502 is the bell mode.

While displaying the currently set environment information on the call notification menu 502 in the pop-up window 502a, the controller 110 determines in step 409 whether a short touch occurs on the call notification menu 502, and switches a type of the call notification menu 502 to a bell mode or a vibration mode in step 410 if the short touch occurs on the call notification menu 502.

While displaying the currently set environment information on the call notification menu 502 in the pop-up window 502a, the controller 110 determines in step 411 whether a long touch occurs on the call notification menu 502, and if so directly switches to the environment setting mode of the call notification menu 502 (as illustrated in FIG. 5D).

While displaying the currently set environment information on the call notification menu 502 in the pop-up window 502a, the controller 110 determines in step 413 whether a double touch occurs in the pop-up window 502a, and if so directly switches to the environment setting mode of the call notification menu 502 (as illustrated in FIG. 5D) in step 412.

In FIGs. 3 to 4, operations of running a related function of a menu, quickly switching to an environment setting mode of the menu, and displaying environment information of the menu, according to a type of a gesture having occurred on the menu on a quick panel, are described. These operations may be equally performed through an icon indicating an application of the terminal, not only a menu on a quick panel. While displaying a plurality of icons indicating their related applications, the controller 110 determines a type of a gesture having occurred on an arbitrary icon. The controller 110 switches to an application mode corresponding to the arbitrary icon if the type of the gesture having occurred on the arbitrary icon is the first gesture. The controller 110 quickly switches to an environment setting mode of an application mode corresponding to the arbitrary icon if the type of the gesture having occurred on the arbitrary icon is the second gesture.

The controller 110 may display currently set environment information on the application corresponding to the arbitrary icon in a pop-up window near the arbitrary icon if the type of the gesture having occurred on the arbitrary icon is the third gesture. While displaying the pop-up window near the arbitrary icon, the controller 110 switches to the application mode corresponding to the arbitrary icon if the first gesture occurs on the arbitrary icon, or switches to the environment setting mode of the application corresponding to the arbitrary icon if the second gesture occurs on the arbitrary icon, or switches to the environment setting mode of the application corresponding to the arbitrary icon if the third gesture occurs on the arbitrary icon.

For example, while displaying a plurality of icons indicating their related applications, the controller 110 may switch to a message mode if the first gesture occurs on an icon indicating a message application (message application icon), or switch to an environment setting mode of the message mode if the second gesture occurs on the message application icon, or display currently set environment information on the message application in a pop-up window near the message application icon if the third gesture occurs on the message application icon.

While displaying the pop-up window near the message application icon, the controller 110 switches to the message mode if the first gesture occurs on the message application icon, or switches to the environment setting mode of the message mode if the second gesture occurs on the message application , or switches to the environment setting mode of the message mode if the third gesture occurs in the pop-up window.

It will be appreciated that embodiments of the present invention can be realized in the form of hardware, software or a combination of hardware and software. Any such software may be stored in the form of volatile or non-volatile storage. Accordingly, an apparatus and method for setting a menu environment in a terminal, according to an exemplary embodiment of the present invention, may be implemented by computer-readable codes stored in a non-transitory computer-readable recording medium. The computer-readable recording medium may include all types of recording devices in which data readable by the computer system is stored. Examples of the recording medium may include a Read-Only Memory (ROM), whether erasable or rewritable or not, a Random-Access Memory (RAM), memory chips, device or integrated circuits, an optical disk, a magnetic tape, a floppy disk, a hard disk, and a non-volatile memory or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

As is apparent from the foregoing description, exemplary embodiments of the present invention may allow the user to conveniently switch to an environment setting mode of a menu, and to easily view currently set environment information on the menu by providing a shortened path for setting a menu environment.

While the invention has been shown and described with reference to certain exemplary embodiments thereof, it will be understood by those skilled in the art that various changes in form and details may be made therein without departing from the scope of the invention as defined by the appended claims.

There now follows a series of numbered clauses defining alternative embodiments.
1. A terminal comprising:
   a display screen arranged to display at least one user interface element; and
   a controller arranged to control the display of the at least one user interface element by the display screen;
   wherein the controller is further arranged to detect a first gesture, and to determine whether the first gesture occurs on or in connection with a first user interface element; and
   wherein if the controller determines that a first gesture occurs on or in connection with the first user interface element, the controller is further arranged to switch to a setting mode associated with the first user interface element in which at least one setting associated with the first user interface element may be set.
2. The terminal of clause 1, wherein the controller is further arranged to detect a second gesture or a third gesture, and to determine whether the second gesture or the third gesture occurs on or in connection with the first user interface element;
   wherein if the controller determines that a second gesture occurs on or in connection with the first user interface element, the controller is further arranged to perform a function associated with the first user interface element; and
   wherein if the controller determines that a third gesture occurs on or in connection with the first user interface element, the controller is further arranged to control the display by the display screen of information which is set through the first user interface element.
3. The terminal of clause 2, wherein the controller is further arranged to control the display by the display screen of information which is set through the first user interface element within a pop-up window.
4. The terminal of clause 2 or clause 3, wherein if the controller determines that a second gesture occurs on or in connection with the first user interface element while the display screen is displaying the information which is set through the first user interface element, the controller is further arranged to perform the function associated with the first user interface element; and
   wherein if the controller determines that a first gesture occurs on or in connection with the first user interface element or that a second gesture occurs on or in connection with the display of information set through the first user interface element, the controller is further arranged to switch to the setting mode associated with the first user interface element.
5. The terminal of any one of clauses 2 to 4, wherein the first gesture, the second gesture and the third gesture each comprise a separate one of a short touch, a long touch and a double touch.
6. The terminal of any one of clauses 2 to 5, wherein the at least one user interface element comprises a Wireless Fidelity, Wi-Fi, menu among a plurality of menus displayed in a quick panel;
   wherein if a short touch occurs on the Wi-Fi menu, the controller sets activation or inactivation for a Wi-Fi function, and if a double touch occurs on the Wi-Fi menu, the controller directly switches to an environment setting mode of the Wi-Fi menu;
   wherein if a long touch occurs on the Wi-Fi menu, the controller controls to display a pop-up window indicating environment information set on the Wi-Fi menu, in the vicinity of the Wi-Fi menu, and controls to display at least one of a type and a signal strength of a router in the pop-up window as the environment information set on the Wi-Fi menu; and
   wherein if a short touch occurs on the Wi-Fi menu while displaying the environment information set on the Wi-Fi menu in a pop-up window, the controller sets activation or inactivation for the Wi-Fi function, and if a double touch occurs on the Wi-Fi menu or if a short touch occurs in the pop-up window, the controller directly switches to an environment setting mode of the Wi-Fi menu.
7. The terminal of any one of clauses 2 to 5, wherein the at least one user interface element comprises a call notification menu among a plurality of menus displayed in a quick panel;
   wherein if a short touch occurs on the call notification menu, the controller sets a type of the call notification menu, and if a double touch occurs on the call notification menu, the controller directly switches to an environment setting mode of the call notification menu;
   wherein if a long touch occurs on the call notification menu, the controller controls to display a pop-up window indicating environment information set on the call notification menu, in the vicinity of the call notification menu, and controls to display, in the pop-up window, at least one of a type of the call notification menu and details of the call notification menu as environment information set on the call notification menu; and
   wherein if a short touch occurs on the call notification menu while displaying environment information set on the call notification menu in the pop-up window, the controller sets a type of the call notification menu, and if a double touch occurs on the call notification menu or if a short touch occurs in the pop-up window, the controller directly switches to an environment setting mode of the call notification menu.
8. A method of operating a terminal, the method comprising:
   displaying at least one user interface element;
   detecting a first gesture; and
   determining if the first gesture occurs on or in connection with a first user interface element;
   wherein if it is determined that a first gesture occurs on or in connection with the first user interface element, the method further comprises switching to a setting mode associated with the first user interface element, in which at least one setting associated with the first user interface element may be set.
9. The method of clause 8, further comprising:
   detecting a second or a third gesture; and
   determining if the second or third gesture occurs on or in connection with the first user interface element;
   wherein if it is determined that a second gesture occurs on or in connection with the first user interface element, the method further comprises performing a function associated with the first user interface element; and
   wherein if it is determined that a third gesture occurs on or in connection with the first user interface element, the method further comprises displaying information which is set through the first user interface element.
10. The terminal of clause 9, wherein displaying information which is set through the first user interface element comprises displaying the information within a pop-up window.
11. The method of clause 9 or clause 10, wherein if a second gesture occurs on or in connection with the first user interface element while displaying the information set through the first user interface element, the method further comprises performing the function associated with the first user interface element; and
   if a first gesture occurs on or in connection with the first user interface element or if a second gesture occurs on or in connection with the display of information set through the first user interface element, the method further comprises switching to the setting mode associated with the first user interface element.
12. The method of any one of clauses 9 to 11, wherein the first gesture, the second gesture and the third gesture each comprise a separate one of a short touch, a long touch and a double touch.
13. The method of any one of clauses 9 to 12, wherein the at least one user interface element comprises a Wi-Fi menu among a plurality of menus displayed in a quick panel;
   wherein if a short touch occurs on the Wi-Fi menu, the controller sets activation or inactivation for a Wireless Fidelity (Wi-Fi) function, and if a double touch occurs on the Wi-Fi menu, the controller directly switches to an environment setting mode of the Wi-Fi menu;
   wherein if a long touch occurs on the Wi-Fi menu, the controller controls to display a pop-up window indicating environment information set on the Wi-Fi menu, in the vicinity of the Wi-Fi menu, and controls to display at least one of a type and a signal strength of a router in the pop-up window as the environment information set on the Wi-Fi menu; and
   wherein if a short touch occurs on the Wi-Fi menu while displaying the environment information set on the Wi-Fi menu in a pop-up window, the controller sets activation or inactivation for the Wi-Fi function, and if a double touch occurs on the Wi-Fi menu or if a short touch occurs in the pop-up window, the controller directly switches to an environment setting mode of the Wi-Fi menu.
14. The method of any one of clauses 9 to 12, wherein the at least one user interface element comprises a call notification menu among a plurality of menus displayed in a quick panel;
   wherein if a short touch occurs on the call notification menu, the controller sets a type of the call notification menu, and if a double touch occurs on the call notification menu, the controller directly switches to an environment setting mode of the call notification menu;
   wherein if a long touch occurs on the call notification menu, the controller controls to display a pop-up window indicating environment information set on the call notification menu, in the vicinity of the call notification menu, and controls to display, in the pop-up window, at least one of a type of the call notification menu and details of the call notification menu as environment information set on the call notification menu; and
   wherein if a short touch occurs on the call notification menu while displaying environment information set on the call notification menu in the pop-up window, the controller sets a type of the call notification menu, and if a double touch occurs on the call notification menu or if a short touch occurs in the pop-up window, the controller directly switches to an environment setting mode of the call notification menu.

## Claims

1. An apparatus comprising:
a display (160) comprising a touch screen;
at least one processor (110); and
memory (130) storing computer program instructions configured, if executed by the at least one processor (110), to cause the apparatus at least to:
display a plurality of icons respectively corresponding to a plurality of different applications on the display (160), wherein a first application corresponding to a first icon among the plurality of displayed icons is an application having configurable settings,
detect (201, 301, 401 YES) a first touch input at the first icon,
execute (204, 304, 404) the first application, if the first touch input is identified (203, 303, 403 YES) as a first input gesture,
display (208, 308, 408), on the display (160), a pop-up window (501a, 502a) indicating at least one configured setting of the first application, if the first touch input is identified (207, 307, 407 YES) as a second input gesture,
detect (209-213, 309-313, 409-413) a second touch input while displaying the pop-up window, and
displaying (212, 312, 412), based on the second touch input being (213, 313, 413 YES) the first input gesture to the pop-up window, a setting mode of the first application on the display (160), the setting mode displaying the configurable settings of the first application,
wherein the configurable settings are configurable by a user through the setting mode.

2. The apparatus of claim 1, wherein, if a user input for configuring at least one of the configurable settings for the first application on the setting mode is identified, the processor is further configured to:
update the pop-up window based on the at least one configured setting.

3. The apparatus of claim 1 or 2, wherein the first input gesture is a short touch gesture.

4. The apparatus of any preceding claim, wherein, to execute the first application, if the first touch input is identified as the first input gesture, the computer program instructions are further configured, if executed by the at least one processor (110), to cause the apparatus to:
initiate a timer upon detecting the first touch input, and
execute the first application if the first touch input is released within a first time duration based on the timer.

5. The apparatus of claim 4, wherein the computer program instructions are further configured, if executed by the at least one processor (110), to cause the apparatus to:
display the pop-up window having at least one configurable setting associated with the first application if the first touch input is maintained for a second time duration.

6. The apparatus of any preceding claim, wherein the computer program instructions are further configured, if executed by the at least one processor (110), to cause the apparatus to:
detect (213, 313, 413) a third touch input at the displayed pop-up window, and
execute the first application, if the third touch input is identified (213, 313, 413 NO) as an input gesture different from the first input gesture.

7. A method of an apparatus comprising a display (160), the display comprising a touch screen, wherein the method comprises:
displaying, on the display (160), a plurality of icons respectively corresponding to a plurality of different applications, wherein a first application corresponding to a first icon among the plurality of displayed icons is an application having configurable settings,
detecting (201, 301, 401 YES) a first touch input at the first icon,
executing (204, 304, 404) the first application, if the first touch input is identified (203, 303, 403 YES) as a first input gesture,
displaying (208, 308, 408), on the display (160) a pop-up window (501a, 502a) indicating at least one configured setting of the first application, if the first touch input is identified (207, 307, 407 YES) as a second input gesture,
detecting (209-213, 309-313, 409-413) a second touch input while displaying the pop-up window, and
displaying (212, 312, 412), based on the second touch input being (213, 313, 413 YES) the first input gesture to the pop-up window, to a setting mode of the first application on the display (160), the setting mode displaying the configurable settings of the first application, and
wherein the configurable settings are configurable by a user through the setting mode.

8. The method of claim 7, further comprising:
if a user input for configuring at least one of the configurable settings for the first application on the setting mode is identified, updating the pop-up window based on the at least one configured setting.

9. The method of claim 7 or 8, wherein the first input gesture is a short touch gesture.

10. The method of any of claims 7 to 9, wherein executing the first application, if the first touch input is identified as the first input gesture, comprises:
initiating a timer upon detecting the first touch input, and
executing the first application if the first touch input is released within a first time duration based on the timer.

11. The method of claim 10, further comprising:
displaying the pop-up window having at least one configurable setting associated with the first application if the first touch input is maintained for a second time duration.

12. The method of any of claims 7 to 11, further comprising:
detecting (213, 313, 413) a third touch input at the displayed pop-up window, and
executing the first application, if the third touch input is identified (213, 313, 413 NO) as an input gesture different from the first input gesture.

13. A computer program comprising instructions which, when the program is executed by a computer, cause the computer to carry out the method of any of claims 7 to 12.
